# EUROPEAN PATENT SPECIFICATION

(11) **EP 3 222 402 B1**
(45) Date of publication and mention of the grant of the patent: **19.09.2018**
(21) Application number: 17162868.8
(22) Date of filing: 24.03.2017
(51) Int. Cl.: B29C 45/17, F16B 17/00, F16L 21/06, F16D 1/076

(54) **INJECTION MOLDING MACHINE**
SPRITZGIESSMASCHINE
MACHINE DE MOULAGE À INJECTION

(30) Priority: 25.03.2016 JP 2016062411
(43) Date of publication of application: 27.09.2017
(73) Proprietor: Sumitomo Heavy Industries, Ltd., Tokyo 141-6025 (JP)
(72) Inventor: MOROZUMI, Tomohito, Chiba-shi, Chiba 263-0001 (JP); SASAKI, Jun, Chiba-shi, Chiba 263-0001 (JP)
(74) Representative: Louis Pöhlau Lohrentz

(56) References cited:
- WO-A1-2007/060737
- WO-A1-2014/041598
- CN-A- 105 328 862
- US-A- 5 433 594

## Description

### BACKGROUND OF THE INVENTION

### Field of the Invention

A certain embodiment of the present invention relates to an injection molding machine.

### Description of Related Art

United States Patent US 5 433 594 discloses an injection molding unit in which a coupling device is applied for coupling the feed screw with a spindle by means of an axial locking device subject to the rotational movement.

Chinese Patent Application CN 105328862 discloses a screw rod installation structure of an injection molding machine.

An injection molding machine described in Japanese Unexamined Patent Application Publication No. 2002-307516 has a heating cylinder, an injection screw provided being inserted into the heating cylinder to be movable forward and backward in an axial direction, and coupling that anchors the injection screw to an extension shaft. The extension shaft, the coupling, and the like constitute a coupling member that couples the injection screw to a pusher plate. By moving the pusher plate forward, the injection screw moves forward, and a molten resin stored in front of the injection screw is injected into a mold from the heating cylinder.

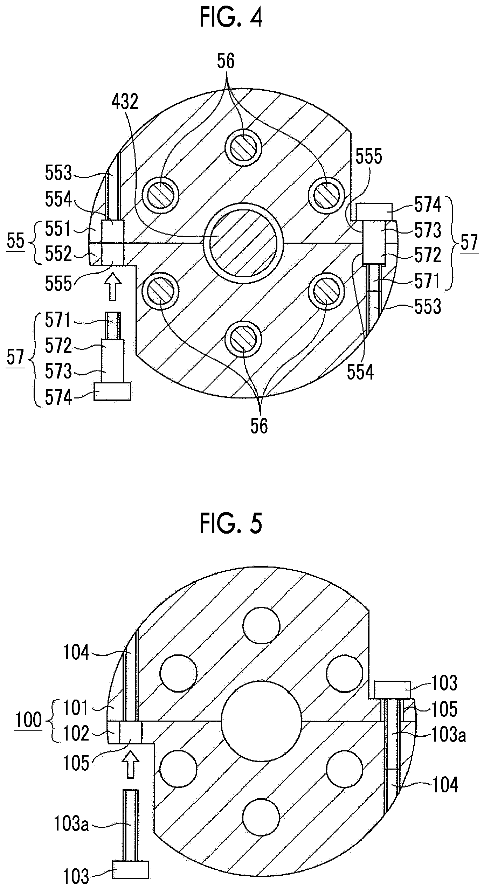

FIG. 5 is a sectional view of related-art coupling that couples an injection screw and an extension shaft together. In FIG. 5, a vertical direction of a paper plane is a movement direction of the injection screw and the extension shaft, and is a movement direction of coupling 100.

The related-art coupling 100 has a plurality of split elements 101 and 102 obtained by splitting a flange. The plurality of split elements 101 and 102 are fastened with a bolt 103. The axial direction of the bolt 103 is made perpendicular to the movement direction of the split elements 101 and 102. The split elements 101 and 102 have a bolt hole 104 that a screw shaft part 103a of the bolt 103 is threadedly engaged, on each side across a boundary. Additionally the split elements 101 and 102 have a straight hole 105 on a side opposite to the bolt hole 104 across the boundary. The straight hole 105 is disposed on an extension line of the bolt hole 104.

A wall surface of the straight hole 105 forms a large gap between this wall surface and the screw shaft part 103a of the bolt 103. This large gap is formed also in the movement direction of the split elements 101 and 102. For that reason, the split elements 101 and 102 may deviate in the movement direction due to a shock caused by the repetition of movement and stop. This problem may be caused also in a case where the axial direction of the bolt 103 is made oblique with respect to the movement direction of the split elements 101 and 102.

The injection molding machine has bolts of which the axial directions are made perpendicular or oblique with respect to the movement direction in various places, and a first movable member and a second movable member that are fastened with these bolts, and has the same problem.

### SUMMARY OF THE INVENTION

The invention has been made in view of the above problem, and a main object thereof is to provide an injection molding machine that can suppress deviation, in a movement direction, of the first movable member and the second movable member that are fastened with the bolts of which axial directions aries made perpendicular or oblique with respect to the movement direction.

In order to solve the above problem, according to an aspect of the invention, there is provided an injection molding machine including a first movable member and a second movable member that move in a predetermined direction; and a bolt that fastens the first movable member and the second movable member . An axial direction of the bolt is made perpendicular or oblique with respect to a predetermined direction . The bolt coaxially includes a screw shaft part, a first straight shaft part, and a second straight shaft part in this order from a tip side. The first movable member and the second movable member have a screw hole and a first straight hole at least on one side across a boundary and a second straight hole on a side opposite to the first straight hole across the boundary, are threadedly engaged with the screw shaft part in the screw hole, receives an outer peripheral surface of the first straight shaft part on a wall surface of the first straight hole, and receives an outer peripheral surface of the second straight shaft part on a wall surface of the second straight hole.

According to the aspect of the invention, there is provided the injection molding machine that can suppress deviation, in the movement direction, of the first movable member and the second movable member that are fastened with the bolt of which the axial direction is made perpendicular or oblique with respect to the movement direction.

### BRIEF DESCRIPTION OF THE DRAWINGS

FIG. 1 is a view illustrating a state during completion of the mold opening of an injection molding machine according to an embodiment.
FIG. 2 is a view illustrating a state during the mold clamping of the injection molding machine according to the embodiment.
FIG. 3 is a sectional view of a coupling tool that couples a screw and a driving shaft according to the embodiment together.
FIG. 4 is a sectional view taken along line IV-IV of FIG. 3.
FIG. 5 is a sectional view of related-art coupling that couples an injection screw and an extension shaft together.

### DETAILED DESCRIPTION OF THE INVENTION

An embodiment for realizing the invention will be described below with reference to the drawings, the same or corresponding components being designated by the same or corresponding reference signs, and the description thereof being omitted.

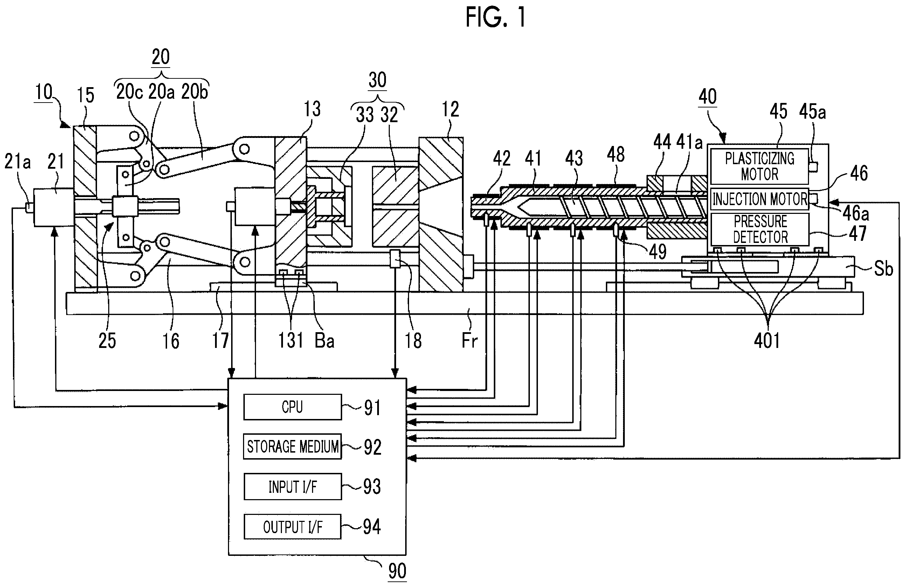

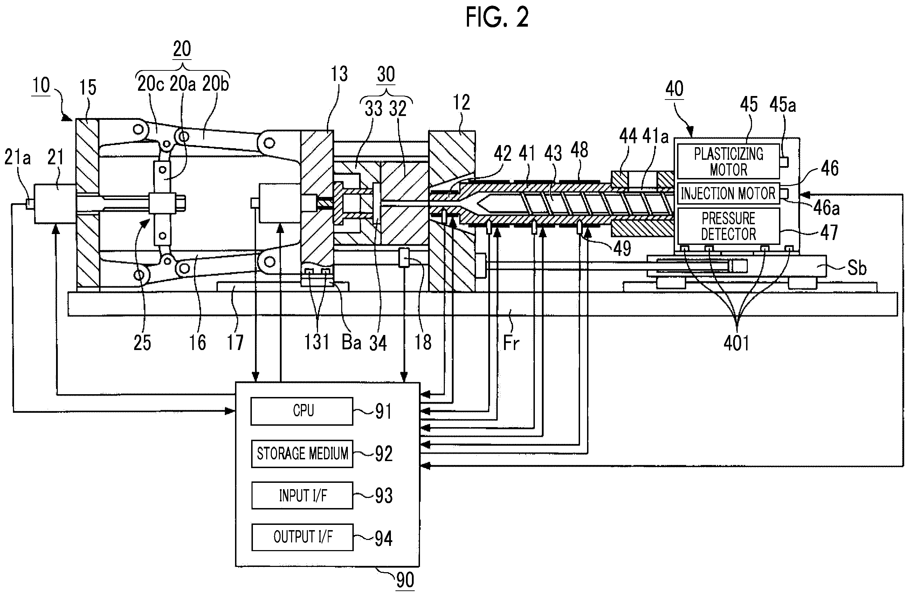

FIG. 1 is a view illustrating a state during completion of the mold opening of an injection molding machine according to an embodiment. FIG. 2 is a view illustrating a state during the mold clamping of the injection molding machine according to the embodiment. As illustrated in FIGS. 1 and2, the injection molding machine has a frame Fr, a mold clamping unit 10, an injection unit 40, and a control unit 90.

First, the mold clamping unit 10 will be described. In the description of the mold clamping unit 10, a description will be made with a movement direction (a rightward direction in FIGS. 1 and 2) of a movable platen 13 during mold closing being as the front and a movement direction (a leftward direction in FIGS . 1 and 2) of the movable platen 13 during mold opening being as the rear.

The mold clamping unit 10 performs mold closing, mold clamping, and mold opening of a mold unit 30. The mold clamping unit 10 has s stationary platen 12, the movable platen 13, a support platen 15, a tie-bar 16, a toggle mechanism 20, a mold clamping motor 21, and a motion conversion mechanism 25.

The stationary platen 12 is fixed to the frame Fr. A stationary mold 32 is attached to the surface of the stationary platen 12 that faces the movable platen 13.

The movable platen 13 is fixed to a movable base Ba with a bolt 131 or the like. The movable base Ba is made movable along a guide (for example, a guide rail) 17 laid on the frame Fr, and the movable platen 13 is made movable forward and backward with respect to the stationary platen 12. A movable mold 33 is attached to the surface of the movable platen 13 that faces the stationary platen 12.

Mold closing, mold clamping, and mold opening are performed by moving the movable platen 13 forward and backward with respect to the stationary platen 12. The stationary mold 32 and the movable mold 33 constitute the mold unit 30.

The support platen 15 is coupled to the stationary platen 12 at a distance therefrom, and is placed on the frame Fr so as to be movable in a mold opening/closing direction. In addition, the support platen 15 may be made movable along a guide laid on the frame Fr. The guide of the support platen 15 may be shared by the guide 17 of the movable platen 13.

In addition, in the present embodiment, the stationary platen 12 is fixed to the frame Fr and the support platen 15 is made movable in the mold opening/closing direction with respect to the frame Fr. However, the support platen 15 may be fixed to the frame Fr and the stationary platen 12 may be made movable in the mold opening/closing direction with respect to the frame Fr.

The tie-bar 16 couples the stationary platen 12 and the support platen 15 together with a space therebetween . A plurality of the tie-bars 16 may be used. Each tie-bar 16 is made parallel to the mold opening/closing direction, and is extended in response to a mold clamping force. At least one tie-bar 16 is provided with a mold clamping force detector 18. The mold clamping force detector 18 detects the strain of the tie-bars 16, thereby detecting a mold clamping force, and outputs a signal showing a detection result to the control unit 90.

In addition, the mold clamping force detector 18 is not limited to the strain gauge type, and may be of a piezoelectric type, a capacitance type, a hydraulic type, an electromagnetic type, or the like, and the attachment position thereof is also not limited to the tie-bar 16.

The toggle mechanism 20 moves the movable platen 13 with respect to the stationary platen 12. The toggle mechanism 20 is disposed between the movable platen 13 and the support platen 15. The toggle mechanism 20 is constituted of a cross-head 20a, a pair of link groups, and the like. Each link group has a plurality of links 20b and 20c coupled together so as to be bendable and stretchable with a pin or the like. One link 20b is rockably attached to the movable platen 13, and the other link 20c is rockably attached to the support platen 15. By moving the cross-head 20a forward and backward, the plurality of links 20b and 20c are bent and stretched, and the movable platen 13 is moved forward and backward with respect the support platen 15.

The mold clamping motor 21 is attached to the support platen 15, and actuates the toggle mechanism 20. The mold clamping motor 21 moves the cross-head 20a forward and backward, thereby bending and stretching the links 20b and 20c and moving the movable platen 13 forward and backward.

The motion conversion mechanism 25 converts a rotational motion of the mold clamping motor 21 into a linear motion, and transmits the converted linear motion to the cross-head 20a. The motion conversion mechanism 25 is constituted of, for example, a ball screw mechanism or the like.

The operation of the mold clamping unit 10 is controlled by the control unit 90. The control unit 90 controls a mold closing step, a mold clamping step, a mold opening step, and the like.

In the mold closing step, by driving the mold clamping motor 21 to move the cross-head 20a forward at a set speed, the movable platen 13 is moved forward and the movable mold 33 is brought into contact with the stationary mold 32. The position and speed of the cross-head 20a is detected, for example, by an encoder 21a or the like of the mold clamping motor 21. A signal showing a detection result of the encoder is sent to the control unit 90.

In the mold clamping step, a mold clamping force is generated by further driving the mold clamping motor 21 to further move the cross-head 20a forward to a set position. A cavity space 34 is formed between the movable mold 33 and the stationary mold 32 during mold clamping, and the cavity space 34 is filled with a liquid molding material. The filled molding material is hardened, and thereby a molding product is obtained. The number of cavity spaces 34 may be plural. In that case, a plurality of molding products are simultaneously obtained.

In the mold opening step, by driving the mold clamping motor 21 to move the cross-head 20a backward at a set speed, the movable platen 13 is moved backward and the movable mold 33 is separated from the stationary mold 32.

Although the mold clamping unit 10 of the present embodiment has the mold clamping motor 21 as a driving source, the mold clamping unit may have a hydraulic cylinder instead of the mold clamping motor 21. Additionally, the mold clamping unit 10 may have a linear motor for mold opening and closing, and may have an electromagnet for mold clamping.

Additionally, although the mold clamping unit 10 injection molding machine of the present embodiment is of a horizontal type in which a mold opening/closing direction is a horizontal direction, the mold clamping unit 10 may be of a vertical type in which the mold opening/closing direction is a vertical direction.

Next, the injection unit 40 will be described. In the description of the injection unit 40, unlike the description of the mold clamping unit 10, a description will be made with a movement direction (a leftward direction in FIGS. 1 and 2) of a screw 43 during filling being as the front, and a movement direction (a rightward direction of FIGS. 1 and 2) of the screw 43 during plasticizing being as the rear.

The injection unit 40 is fixed to a sliding base Sb with a bolt 401 or the like, and the sliding base Sb is made movable forward and backward along a guide laid on the frame Fr. Accordingly, the injection unit 40 is made movable forward and backward with respect to a mold unit 30. The injection unit 40 is touched on the mold unit 30, and the inside of the mold unit 30 is filled with a molding material.

The injection unit 40 has, for example, a cylinder 41, a nozzle 42, a screw 43, a cooler 44, a plasticizing motor 45, an injection motor 46, a pressure detector 47, a heater 48, and a temperature detector 49.

The cylinder 41 heats the molding material supplied thereinto from a supply port 41a. The supply port 41a is formed at a rear part of the cylinder 41. The cooler 44, such as a water-cooling cylinder, is provided at an outer periphery of the rear part of the cylinder 41. The heater 48, such as a band heater, and the temperature detector 49 are provided at the outer periphery of the cylinder 41 ahead of the cooler 44.

The cylinder 41 is divided into a plurality of zones in an axial direction (a leftward-rightward direction of FIGS. 1 and 2) of the cylinder 41. The heater 48 and the temperature detector 49 is provided in each zone. The control unit 90 controls the heater 48 such that the actually measured temperature of the temperature detector 49 reaches a set temperature in each zone.

The nozzle 42 is provided at a front end of the cylinder 41, and is pressed against the mold unit 30. The heater 48 and the temperature detector 49 are provided at an outer periphery of the nozzle 42. The control unit 90 controls the heater 48 such that the actually measured temperature of the nozzle 42 reaches a set temperature.

The screw 43 is disposed within the cylinder 41 so as to be rotatable and movable forward and backward. The screw corresponds to an injection member set forth in the claims.

The plasticizing motor 45 rotates the screw 43, thereby feeding the molding material forward along a spiral groove of the screw 43. The molding material is gradually melted by the heat from the cylinder 41 while being fed forward. When the liquid molding material is fed to the front of the screw 43 and accumulated at a front part of the cylinder 41, the screw 43 is moved backward.

The injection motor 46 moves the screw 43 forward and backward. The injection motor 46 moves the screw 43 forward, thereby injecting the liquid molding material accumulated in front of the screw 43 from the cylinder 41, and filling the inside of the mold unit 30 with the molding material. Thereinafter, the injection motor 46 pushes the screw 43 forward, and applies a pressure to the molding material within the mold unit 30. An insufficient molding material can be replenished. A motion conversion mechanism that converts the rotational motion of the injection motor 46 into a linear motion of the screw 43 is provided between the injection motor 46 and the screw 43. The motion conversion mechanism is constituted of, for example, a ball screw mechanism or the like.

The pressure detector 47 is disposed, for example, between the injection motor 46 and the screw 43, and detects a pressure that the screw 43 receives from the molding material, a back pressure for the screw 43, and the like. The pressure that the screw 43 receives from the molding material is equivalent to a pressure acting on the molding material from the screw 43. The pressure detector 47 sends a signal showing a detection result to thereof the control unit 90.

The operation of the injection unit 40 is controlled by the control unit 90. The control unit 90 controls a filling step, a holding pressure step, a plasticizing step, and the like.

In the filling step, the injection motor 46 is driven to move the screw 43 forward at a set speed, and the inside of the mold unit 30 is filled with the liquid molding material accumulated in front of the screw 43. The position and speed of the screw 43 are detected by, for example, an encoder 46a of the injection motor 46. A signal showing a detection result of the encoder is sent to the control unit 90. If the position of the screw 43 reaches a set position, switching (so-called V/P switching) from the filling step to the holding pressure step is performed. The set speed of the screw 43 may be changed according to the position, time, or the like of the screw 43.

In addition, after the position of the screw 43 reaches the set position in the filling step, the screw 43 may be temporarily stopped at the set position, and then, the V/P switching may be performed. Immediately before the V/P switching, the slow-speed forward movement or the slow-speed backward movement of the screw 43 may be performed instead of the stop of the screw 43.

In the holding pressure step, the injection motor 46 is driven to push the screw 43 forward with a set pressure, and a pressure is applied to the molding material within the mold unit 30. An insufficient molding material can be replenished. The pressure of the molding material is detected by, for example, the pressure detector 47. A signal showing a detection result of the pressure detector is sent to the control unit 90.

In the holding pressure step, the molding material within the mold unit 30 is gradually cooled, and an inlet of the cavity space 34 is covered with a hardened molding material when the holding pressure step is completed. This state is referred to as a gate seal, and a backflow of the molding material from the cavity space 34 is prevented. A cooling step is started after the holding pressure step. In the cooling step, hardening of the molding material within the cavity space 34 is performed. The plasticizing step may be performed during the cooling step for shortening of a molding cycle.

In the plasticizing step, the plasticizing motor 45 is driven to rotate the screw 43 at a set number of rotations, and feeds the molding material forward along the spiral groove of the screw 43. The molding material is gradually melted with this feeding. When the liquid molding material is fed to the front of the screw 43 and accumulated at a front part of the cylinder 41, the screw 43 is moved backward. The number of rotations of the screw 43 is detected by, for example, an encoder 45a of the plasticizing motor 45. A signal showing a detection result of the encoder is sent to the control unit 90.

In the plasticizing step, in order to limit a sudden backward movement of the screw 43, the injection motor 46 is driven to apply a set back pressure to the screw 43. The back pressure for the screw 43 is detected by, for example, the pressure detector 47. A signal showing a detection result of the pressure detector is sent to the control unit 90. If the screw 43 moves backward to a set position and a predetermined amount of the molding material is accumulated in front of the screw 43, the plasticizing step is completed.

The control unit 90 has a central processing unit (CPU) 91, a storage medium 92, such as a memory, an input interface 93, and an output interface 94, as illustrated in FIGS. 1 and 2. The control unit 90 makes the CPU 91 execute a program stored in the storage medium 92, thereby controlling various kinds of control. Additionally, the control unit 90 receives a signal from the outside with the input interface 93, and transmits a signal to the outside with the output interface 94.

Meanwhile, the injection molding machine has bolts of which axial directions are made perpendicular or oblique with respect to the movement direction in various places, and a first movable member and a second movable member that are fastened with this bolts. Hereinafter, a case where the first movable member, the second movable member, and the bolts are used for coupling between the screw 43 and a driving shaft will be described.

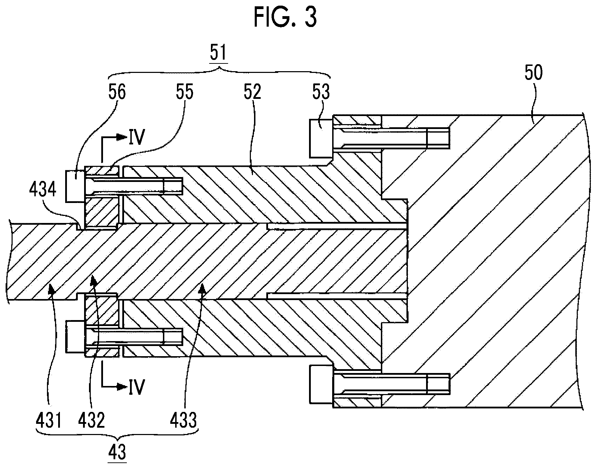

FIG. 3 is a sectional view of a coupling tool that couples the screw and the driving shaft according to the embodiment together. In FIG. 3, the movement direction of the screw 43, the driving shaft 50, and a coupling tool 51 is the leftward-rightward direction. As illustrated in FIG. 3, the injection unit 40 has a coupling tool 51 that couples the screw 43 and the driving shaft 50 together.

The screw 43 coaxially has a screw shaft 431, an intermediate shaft 432, and a spline shaft 433 in this order from a front side toward a rear side. The screw shaft 431 is inserted into the cylinder 41, and forms a spiral groove that feeds the molding material to be supplied into the cylinder 41. The intermediate shaft 432 is formed between the screw shaft 431 and the spline shaft 433, and has an external diameter smaller than the screw shaft 431 and the spline shaft 433. The spline shaft 433 protrudes backward from the cylinder 41.

The driving shaft 50 drives the screw 43. For example, the driving shaft 50 transmits a driving force of the plasticizing motor 45 (refer to FIGS. 1 and 2) and a driving force of the injection motor 46 (refer to FIGS. 1 and 2) to the screw 43. The driving shaft 50 presses a rear end part (more specifically, a rear end part of the spline shaft 433) of the screw 43 from the rear.

The coupling tool 51 couples the screw 43 and the driving shaft 50 together. The coupling tool 51 has, for example, coupling 52, a coupling bolt 53, a presser flange 55, a presser bolt 56, and a fastening bolt 57 (refer to FIG. 4).

The coupling 52 has a spline hole corresponding to the spline shaft 433. The spline shaft 433 is inserted into the spline hole, spline-fastened to coupling 52, and rotates together with the coupling 52.

The coupling bolt 53 fixes the coupling 52 to the driving shaft 50. The coupling bolt 53 is made parallel to the screw 43, and a plurality of the coupling bolts are disposed at intervals around the screw 43.

In addition, although the coupling 52 is formed separately from the driving shaft 50 in FIG. 3, the coupling may be formed integrally.

The presser flange 55 has a through-hole at the center thereof . The internal diameter of the presser flange 55 is larger than the external diameter of the intermediate shaft 432, and is smaller than the external diameter of the spline shaft 433. Meanwhile, the external diameter of the presser flange 55 is larger than the external diameter of the spline shaft 433.

The presser flange 55 is fitted into a groove 434 formed between the screw shaft 431 and the spline shaft 433. For that reason, the presser flange 55 is split in a circumferential direction, and has a plurality of split elements 551 and 552 (refer to FIG. 4). One of the plurality of split elements 551 and 552 corresponds to a first movable member set forth in the claims, and the other of the plurality of split elements 551 and 552 corresponds to a second movable member set forth in the claims.

The presser bolt 56 fixes the presser flange 55 to the coupling 52. The presser bolt 56 is made parallel to the screw 43, and a plurality of the presser bolts are disposed at intervals around the screw 43.

By fastening the presser bolts 56, the presser flange 55 presses the spline shaft 433 against the driving shaft 50. Accordingly, a clearance is eliminated between the driving shaft 50 and the screw 43, the collision between the driving shaft 50 and screw 43 caused by repeating forward and backward movement and stop can be suppressed, and failures, such as abnormal wear or abnormal deformation, can be reduced.

A gap may be formed between the presser flange 55 and the coupling 52 in a state where the presser flange 55 presses the spline shaft 433 against the driving shaft 50. Compared to a case where there is no gap, the force of fastening the presser bolts 56 can be efficiently converted into the force the spline shaft 433 against the driving shaft 50.

Fig. 4 is a sectional view taken along line IV-IV of Fig. 3. In FIG. 4, the movement direction of the coupling tool 51 is a vertical direction of a paper plane.

The fastening bolt 57 fastens the plurality of split elements 551 and 552. The axial direction of the fastening bolt 57 is made perpendicular to the movement direction of the plurality of split elements 551 and 552. The fastening bolt 57 corresponds to a bolt set forth in the claims. In addition, the axial direction of the fastening bolt 57 may be made oblique with respect to the movement direction of the plurality of split elements 551 and 552.

The fastening bolt 57 coaxially has a screw shaft part 571, a first straight shaft part 572, a second straight shaft part 573, and a head part 574 in this order from the tip side. The first straight shaft part 572 and second straight shaft part 573 may have the same shaft diameter. The first straight shaft part 572 and the second straight shaft part 573 have no groove at outer peripheries thereof unlike the screw shaft part 571, and for example, are formed in a columnar shape.

The plurality of split elements 551 and 552 have a screw hole 553 and a first straight hole 554 at least on one side (both sides in FIG. 4) across a boundary, and have a second straight hole 555 on a side opposite to the first straight hole 554 across a boundary. The second straight hole 555 is disposed on an extension line of the first straight hole 554. The first straight hole 554 and the second straight hole 555 is different from the screw hole 553, and have no groove on wall surfaces thereof. The wall surfaces may be column surfaces.

The plurality of split elements 551 and 552 are threadedly engaged with the screw shaft part 571 in the screw hole 553, receive an outer peripheral surface of the first straight shaft part 572 on the wall surface of the first straight hole 554, and receive an outer peripheral surface of the second straight shaft part 573 on the wall surface of the second straight hole 555.

The shaft diameter (diameter) of the first straight shaft part 572 is slightly smaller than the hole diameter (diameter) of the first straight hole 554 for fitting. The shaft diameter of the first straight shaft part 572 is, for example, 98% or more of the hole diameter of the first straight hole 554. Additionally, the shaft diameter of the first straight shaft part 572 is, for example, small within a range of 0.2 mm or less with the hole diameter of the first straight hole 554 as a reference.

Similarly, the shaft diameter of the second straight shaft part 573 is slightly smaller than the hole diameter of the second straight hole 555 for fitting. The shaft diameter of the second straight shaft part 573 is, for example, 98% or more of the hole diameter of the second straight hole 555. Additionally, the shaft diameter of the second straight shaft part 573 is, for example, small within a range of 0.2 mm or less with the hole diameter of the second straight hole 555 as a reference.

Ad described above, the split elements 551 and 552 of the present embodiment receive the outer peripheral surface of the first straight shaft part 572 on the wall surface of the first straight hole 554, and receive the outer peripheral surface of the second straight shaft part 573 on the wall surface of the second straight hole 555. Therefore, unlike the related art, there is almost no gap that widens in the movement direction between the fastening bolt 57 and the split elements 551 and 552, and the deviation of the plurality of split elements 551 and 552 in the movement direction can be suppressed. Accordingly, deformation of the fastening bolt 57 can be suppressed and the durability of the fastening bolt 57 can be improved.

In this way, according to the present embodiment, since the deviation of the plurality of split elements 551 and 552 in the movement direction (leftward-rightward direction in FIG. 3) can be suppressed, a gap formed between the presser flange 55 and the coupling 52 can be adjusted precisely. Therefore, the spline shaft 433 can be reliably pressed against the driving shaft 50 by the fastening force of the presser bolt 56, the collision between the driving shaft 50 and the screw 43 caused by repeating forward and backward movement and stop can be further suppressed, and failures, such as abnormal wear and abnormal deformation, can be further reduced.

Additionally, according to the present embodiment, the first straight shaft part 572 and second straight shaft part 573 have the same shaft diameter. Since a step is eliminated between the first straight shaft part 572 and the second straight shaft part 573, any stress concentration between these shaft parts can be suppressed and the durability of the fastening bolt 57 can be improved. Particularly, there is neither screw ridges nor screw valleys in the vicinity of the boundary between the split elements 101 and 102 unlike a case where the screw shaft part 103a crosses the boundary as the related-art bolt 103 illustrated in FIG. 5. Therefore, any stress concentration in the vicinity of the boundary can be reduced. and breaking of the fastening bolt 57 can be suppressed.

Although the embodiments of the injection molding machine have been described above in detail, the invention is not limited to the above specific embodiments, and various alterations and improvements can be made within the scope of the invention described in the claims.

For example, although a case where the invention is applied to the coupling tool 51 that couples the screw 43 and the driving shaft 50 together has been described in the above embodiment, the invention is not limited to this. For example, a bolt set forth in the claims may be the bolt 131 that fastens the movable platen 13 and the movable base Ba, and may be the bolt 401 that fastens the injection unit 40 and the sliding base Sb.

Although the injection unit 40 of the present embodiment is of an in-line screw type, the injection unit may be of a preplasticization type. The preplasticization type injection unit supplies a molding material melted within a plasticizing cylinder to an injection cylinder, and injects the molding material into the mold unit from the injection cylinder. The screw is disposed inside the plasticizing cylinder so as to be rotatable or rotatable and movable forward and backward, and a plunger is disposed within the injection cylinder so as to be movable forward and backward. At least one of the injection cylinder and the plasticizing cylinder corresponds to a cylinder set forth in the claims, and at least one of the screw and the plunger corresponds to an injection member set forth in the claims .

### Brief Description of the Reference Symbols

- 10:: MOLD CLAMPING UNIT
- 13:: MOVABLE PLATEN
- 40:: INJECTION UNIT
- 41:: CYLINDER
- 42:: NOZZLE
- 43:: SCREW
- 45:: PLASTICIZING MOTOR
- 46:: INJECTION MOTOR
- 50:: DRIVING SHAFT
- 51:: COUPLING TOOL
- 52:: COUPLING
- 53:: COUPLING BOLT
- 55:: PRESSER FLANGE
- 551:: SPLIT ELEMENT
- 552:: SPLIT ELEMENT
- 553:: SCREW HOLE
- 554:: FIRST STRAIGHT HOLE
- 555:: SECOND STRAIGHT HOLE
- 56:: PRESSER BOLT
- 57:: FASTENING BOLT
- 571:: SCREW SHAFT PART
- 572:: FIRST STRAIGHT SHAFT PART
- 573:: SECOND STRAIGHT SHAFT PART

## Claims

1. An injection molding machine comprising:
a first movable member (551) and a second movable member (552) that move in a predetermined direction; and
a bolt (57) that fastens the first movable member (551) and the second movable member (552),
wherein an axial direction of the bolt (57) is made perpendicular or oblique with respect to the predetermined direction,
wherein the bolt (57) coaxially includes a screw shaft part (571), a first straight shaft part (572), and a second straight shaft part (573) in this order from a tip side, and
wherein the first movable member (551) and the second movable member (552) have a screw hole (553) and a first straight hole (554) at least on one side across a boundary and a second straight hole (555) on a side opposite to the first straight hole (554) across the boundary, are threadedly engaged with the screw shaft part (571) in the screw hole (553), receive an outer peripheral surface of the first straight shaft part (572) on a wall surface of the first straight hole (554), and receive an outer peripheral surface of the second straight shaft part (573) on a wall surface of the second straight hole (555).

2. The injection molding machine according to Claim 1,
wherein the first straight shaft part (572) and the second straight shaft part (573) have the same shaft diameter.

3. The injection molding machine according to Claim 1 or 2, further comprising:
a cylinder (41) that heats a molding material to be supplied thereinto; and
an injection member (43) disposed within the cylinder (41) to be movable forward and backward,
wherein the first movable member (551), the second movable member (552), and the bolt (57) are used for coupling between the injection member (43), and a driving shaft (50) that drives the injection member.

## Patentansprüche

1. Spritzgießmaschine, umfassend:
ein erstes bewegliches Glied (551) und ein zweites bewegliches Glied (552), die sich in einer vorgegebenen Richtung bewegen; und
einen Bolzen (57), der das erste bewegliche Glied (551) und das zweite bewegliche Glied (552) befestigt,
wobei eine axiale Richtung des Bolzens (57) senkrecht oder schräg bezüglich der vorgegebenen Richtung hergestellt ist,
wobei der Bolzen (57) koaxial einen Schraubschaftteil (571), einen ersten geraden Schaftteil (572) und einen zweiten geraden Schaftteil (573) in dieser Reihenfolge von einer Spitzenseite her beinhaltet, und
wobei das erste bewegliche Glied (551) und das zweite bewegliche Glied (552) ein Schraubloch (553) und ein erstes gerades Loch (554) zumindest auf einer Seite über eine Grenze hinweg und ein zweites gerades Loch (555) auf einer Seite gegenüber dem ersten geraden Loch (554) über die Grenze hinweg aufweisen, über Gewinde mit dem Schraubschaftteil (571) im Schraubloch (553) in Eingriff genommen sind, eine Außenumfangsfläche des ersten geraden Schaftteils (572) an einer Wandfläche des ersten geraden Lochs (554) aufnehmen und eine Außenumfangsfläche des zweiten geraden Schaftteils (573) an einer Wandfläche des zweiten geraden Lochs (555) aufnehmen.

2. Spritzgießmaschine nach Anspruch 1,
wobei der erste gerade Schaftteil (572) und der zweite gerade Schaftteil (573) denselben Schaftdurchmesser aufweisen.

3. Spritzgießmaschine nach einem der Ansprüche 1 oder 2, ferner umfassend:
einen Zylinder (41), der ein Gießmaterial erhitzt, das in diesen zugeführt werden soll; und
ein Einspritzglied (43), das derart im Zylinder (41) angeordnet ist, dass es vorwärts und rückwärts beweglich ist,
wobei das erste bewegliche Glied (551), das zweite bewegliche Glied (552) und der Bolzen (57) zum Kuppeln zwischen dem Einspritzglied (43) und einer Antriebswelle (50) benutzt werden, die das Einspritzglied antreibt.

## Revendications

1. Machine de moulage par injection comprenant :
un premier élément mobile (551) et un second élément mobile (552) qui se déplacent dans une direction prédéterminée ; et
un boulon (57) qui fixe le premier élément mobile (551) et le second élément mobile (552),
dans laquelle une direction axiale du boulon (57) est rendue perpendiculaire ou oblique par rapport à la direction prédéterminée,
dans laquelle le boulon (57) comprend, de manière coaxiale, une partie de tige de vis (571), une première partie de tige droite (572) et une seconde partie de tige droite (573) dans cet ordre à partir d'un côté de pointe, et
dans laquelle le premier élément mobile (551) et le second élément mobile (552) ont un trou de vis (553) et un premier trou droit (554) au moins sur un côté de part et d'autre d'une limite et un second trou droit (555) sur un côté opposé au premier trou droit (554) de part et d'autre de la limite, sont mis en prise, par filetage, avec la partie de tige de vis (571) dans le trou de vis (553), reçoivent une surface périphérique externe de la première partie de tige droite (572) sur une surface de paroi du premier trou droit (554), et reçoivent une surface périphérique externe de la seconde partie de tige droite (573) sur une surface de paroi du second trou droit (555).

2. Machine de moulage par injection selon la revendication 1,
dans laquelle la première partie de tige droite (572) et la seconde partie de tige droite (573) ont le même diamètre de tige.

3. Machine de moulage par injection selon la revendication 1 ou 2, comprenant en outre :
un cylindre (41) qui chauffe un matériau de moulage à amener dans ce dernier ; et
un élément d'injection (43) disposé à l'intérieur du cylindre (41) pour être déplacé vers l'avant et vers l'arrière,
dans laquelle le premier élément mobile (551) et le second élément mobile (552), et le boulon (57) sont utilisés pour le couplage entre l'élément d'injection (43) et une tige d'entraînement (50) qui entraîne l'élément d'injection.
